# EUROPÄISCHE PATENTSCHRIFT

(11) **EP 1 960 705 B1**
(45) Veröffentlichungstag und Bekanntmachung des Hinweises auf die Patenterteilung: **09.01.2013**
(21) Anmeldenummer: 05816377.5
(22) Anmeldetag: 09.12.2005
(51) Int. Cl.: F16L 57/00

(54) **ZWEITEILIGER PROTEKTOR FÜR EIN MIT EINEM AUSSEN- ODER INNENGEWINDE VERSEHENES ROHRENDE**
TWO-PART PROTECTOR FOR A PIPE END WHICH IS PROVIDED WITH AN EXTERNAL OR INTERNAL THREAD
PROTECTEUR EN DEUX PIECES POUR EXTREMITE DE TUBE DOTEE D'UN FILET EXTERIEUR OU D'UN FILET INTERIEUR

(30) Priorität: 15.11.2005 DE 102005054815
(43) Veröffentlichungstag der Anmeldung: 27.08.2008
(73) Patentinhaber: Thread Guard Technology Ltd., Gibraltar (GI)
(72) Erfinder: KOVACS, George, A., Jr., 29574 Ebstorf (DE)
(74) Vertreter: Bünemann, Egon
(86) Internationale Anmeldenummer: PCT/EP2005/013181
(87) Internationale Veröffentlichungsnummer: WO 2007/057047

(56) Entgegenhaltungen:
- EP-A- 0 128 575
- EP-A- 0 297 493
- JP-A- 8 217 130
- US-A- 4 157 100
- US-A- 4 655 256

## Beschreibung

Die Erfindung betrifft einen zweiteiligen Protektor nach dem Oberbegriff des Anspruchs 1. Die Erfindung betrifft weiterhin ein Verfahren zur Herstellung eines solchen Protektors nach den Oberbegriffen der Ansprüche 13 und 14. Solche Protektoren werden insbesondere für Transport und Lagerung von Rohren mit Gewinden oder anderen sensiblen Kupplungen an den Rohrenden benutzt. Vor allem sind Bohrstrangrohre gegenüber robusten Handhabungs- und Lagerbedingungen an den empfindlicheren Gewindebereichen zu schützen. Dabei können die Gewinde Außengewinde oder auch - etwa an Muffenenden von Rohren - Innengewinde sein. Beide sind gegen Beschädigungen, Verformungen und Verschmutzungen zu schützen. Ein "ahnlicher Protecktor ist aus US 4655256 A bekannt.

Zur unmittelbaren Abdeckung eines solchen Gewindes eignen sich vor allem Gewindeteile aus Kunststoff, die in der Herstellung leicht an unterschiedliche Gewinde anzupassen sind und vor allem bei endseitigen Stoßbelastungen gegenüber dem Gewinde des Rohrendes weniger hart und auch weniger fest sind, so daß sie Belastungen abfangen und nicht auf das Gewindeteil übertragen. Dies ist die unmittelbare schonende Gewindeabdeckung. Damit diese allerdings auch heftigen Beanspruchungen standhalten kann, werden solche Protektoren häufig zusätzlich mit einer zylindrischen Hülse aus Metall-vorzugsweise Stahl-versehen, die zum Schutz eines Außengewindes um das Kunststoff-Gewindeteil herum angeordnet ist, bzw. zum Schutz eines Innengewindes daß Kunststoff-Gewindeteil innenseitig abdeckt. In beiden Fällen liegt das Gewindeteil mit einer Vorderseite (Gewindeseite) am Gewinde und wird rückseitig durch die Hülse aus Metall abgestützt. Beide Teile des Protektors werden in bekannter Weise verrastend zusammengesteckt. Dabei ergibt sich allerdings häufig das Problem, daß die sehr viel härtere und festere Metallhülse am Gewindeteil angeformte Rastvorsprünge beschädigt. Infolgedessen und auch infolge vorsorglicher Toleranzen beim Sitz der Verrastung entsteht die Gefahr, daß die Hülse gegenüber dem Gewindeteil sich löst oder aufgrund von Bewegungsspiel beim Transport Schäden am Kunststoff-Gewindeteil erzeugt. Der Rastsitz zwischen Hülse und Gewindeteil muß auch unter extremen Temperaturen gewährleistet bleiben, wobei die sehr unterschiedlichen Wärmeausdehnungen von Metall (Hülse) und Kunststoff (Gewindeteil) insbesondere Schwierigkeiten schaffen. Probleme mit dem einwandfreien Rastsitz zwischen Gewindeteil und Hülse wirken sich auch auf die Möglichkeit aus, den Protektor vom Gewinde abzuschrauben oder erneut auf diesen aufzuschrauben, wenn der Schraubangriff über die Metallhülse erfolgt.

Aufgabe der Erfindung ist es dementsprechend, einen zweiteiligen Protektor zu schaffen, bei dem Hülse und Gewindeteil fest und spielarm zusammenzustecken sind, ohne daß das Gewindeteil dabei beschädigt wird, und bei dem auch eine gute Verbindung zwischen Hülse und Gewindeteil für eine problemlose Handhabung beim Auf- und Abschrauben sorgt, und zwar auch bei Einsätzen unter extremen Temperaturverhältnissen.

Gemäß der Erfindung wird diese Aufgabe von einem zweiteiligen Protektor nach dem Oberbegriff des Anspruchs 1 dadurch gelöst, daß die Hülse mit einem beim Verrastungsvorgang vornliegenden Stirnrand zumindest nahe den Rastaussparungen eng an das Gewindeteil angeformt ist.

Es ist gerade im Bereich der Rastaussparungen wichtig, daß die Hülse eng am Gewindeteil anliegt, um jegliche Ablösebewegungen zu verhindern und auch einen guten Sitz bei Drehbewegungen zu erreichen. Dies wird vorzugsweise dadurch erreicht, daß die Hülse zunächst mit einer schräg aufgleitenden Stirnkante aufgeschoben wird und dann hinter den Rastaussparungen im Sinne einer engen Anlage nachträglich angeformt wird.

Es versteht sich, daß der Bereich der Rastaussparungen in dieser Hinsicht besonders wichtig ist, so daß sich die enge Anlage auf Umfangsbereiche nahe den Verrastungen beschränken kann. Im allgemeinen wird aber die enge Anlage gleichförmig längs des gesamten vornliegenden Stirnrandes vorgesehen werden um auch bereichsweise Spiel oder frei abstehende Kanten zu vermeiden.

Besonders vorteilhaft ist, wenn die Hülse becherförmig ausgebildet ist, was mit einem Becherboden einen Abschuß der Rohröffnung ersielt, den Eingriff grober Werkzeuge wie etwa Hebezeuge, verhindert und auch bei einem Kunststoff-Spritzgußteil fertigungstechnisch gut zu erstellen ist.

Die Hülse kann an einem beim Verrastungsvorgang hintenliegenden Endrand einen Rollrand aufweisen, der die Hinterkante des Gewindeteils übergreift und damit auch für einen Randschutz sorgt. Darüber hinaus können Verzahnungen am Rollrand vorgesehen werden, um eine Verdrehsicherung zu schaffen, die das Gewindeteil und die Hülse gegeneinander in Drehrichtung festlegt und eine Belastung der Rastvorsprünge und Rastaussparungen bei Drehbeaufschlagung des Protektors verhindert, so daß die Verrastung unbelastet bleibt.

Die entsprechende Verformung des Stirnrandes kann bei einem erfindungsgemäßen Verfahren mit Hilfe eines Formenstempels erfolgen, der vorzugsweise zylindrisch ausgebildet ist. Ebenso kann die Hülse an einem hinteren Rand mit Fortsätzen ausgestaltet werden, die bei der Umformung zu einem Rollrand der Verzahnung mit Eingriff in Aufnahmen des Gewindeteils dienen.

Ausführungsbeispiele der Erfindung sind in der Zeichnung dargestellt und werden nachfolgend näher beschrieben. In der Zeichnung zeigen:
- Fig. 1: ein Stanzblech zur Fertigung einer Metallhülse für einen Protektor,
- Fig. 2: eine Metallhülse für einen Protektor für ein Außengewinde,
- Fig. 3: Metallhülse nach Fig. 2 mit Verformungswerkzeug,
- Fig. 4: eine abgewandelte Ausführungsform zur Metallhülse nach Fig. 2 und 3 mit abgeändertem Rollrand,
- Fig. 5: ein Gewindeteil zu einem Protektor,
- Fig. 6: ein Protektor mit Gewindeteil und Metallhülse,
- Fig. 7: Protektor nach Fig. 6 mit einem Verformungswerkzeug,
- Fig. 8: eine andere Ausführungsform eines Protektors,
- Fig. 9: ein Stanzblech zur Herstellung einer Metallhülse für einen Protektor für ein Innengewinde,
- Fig. 10: Metallhülse für einen Protektor für ein Innengewinde,
- Fig. 11: Protektor nach Fig. 10 mit Verformungswerkzeug,
- Fig. 12: Detail einer Metallhülse in einer weiteren Ausführungsform,
- Fig. 13: Gewindeteil für einen Protektor für ein Innengewinde,
- Fig. 14: Protektor für ein Innengewinde,
- Fig. 15: Protektor nach Fig. 14 mit einem Verformungswerkzeug,
- Fig. 16, 17: Ansichten einer Metallhülse für einen Protektor für ein
- und 18: Innengewinde,
- Fig. 19, 20: eine weitere Ausführungsform einer Metallhülse für einen Protektor
- und 21: für ein Innengewinde.

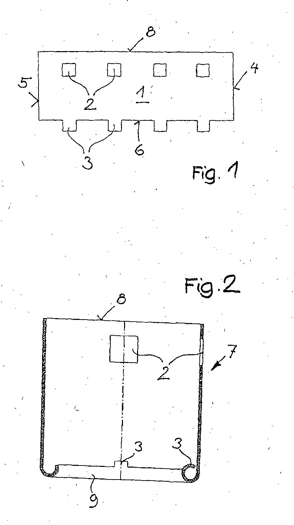

Ein in Fig. 1 insgesamt mit 1 bezeichnetes Stanzblech aus Stahl im wesentlichen rechteckigen Querschnitts weist innenliegende Aussparungen 2 und nach unten vorstehende Fortsätze 3 auf. Ein solches Stanzblech wird quer zu seiner Längserstreckung ringförmig zusammengebogen und an dabei aneinanderstoßenden Rändern 4,5 auf Stoß zusammengeschweißt und längs eines unteren Randes 6 nach innen eingerollt, so daß sich eine Hülse 7 gemäß Fig. 2 ergibt. Dabei ist die Hülse an einem den Aussparungen benachbarten Stirnrand 8 zunächst zylindrisch gemäß der übrigen Hülse geformt. Ein auf der gegenüberliegenden Seite geformter Rollrand 9 wird auch in der gebogenen Form über die Fortsätze 3 weitergeführt.

Anzumerken ist, daß die Fig. 2 keinen (symmetrisch) diametralen Schnitt durch die Hülse zeigt, sondern auf einer Hälfte eine abgewinkelte Schnittebene. Tatsächlich sind die vier Aussparungen 2 und auch die Fortsätze 3 gleichförmig am Umfang unter einem Umfangswinkel von jeweils 90° gegeneinander versetzt, der Schnitt ist zur Darstellung allerdings auf der linken Seite der Fig. 2 nicht durch eine Aussparung 2 und einen Fortsatz 3 gelegt, sondern daneben.

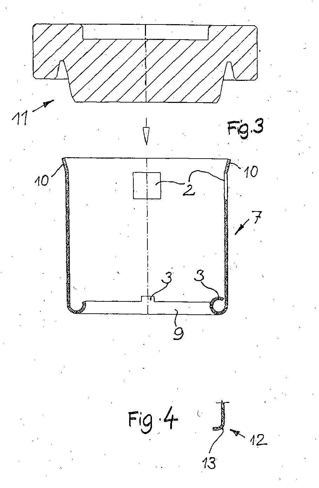

In Fig. 3 wird eine weitere Verformung der Hülse 7 dargestellt, die zwischen den Aussparungen 2 und dem vornliegenden Stirnrand 8 eine konische Aufweitung 10 mit Hilfe eines stempelartigen, zylindrischen Formwerkzeugs 11 erfährt, welches axial von oben in die Hülse eingedrückt wird und den Stirnrand 8 aufweitet.

Der Rollrand 9 bleibt dabei unverändert. In Fig. 4 ist ein alternativer Rollrand 12 zu einer sonst der Hülse 7 entsprechenden Hülse dargestellt, der eine geringere Umformung aufweist und einfacher herzustellen ist. Er bietet aber genauso wie der Rollrand 9 eine umlaufende abgerundete Kante 13 für eine robuste Hülse, die sowohl gegen axiale wie auch radiale Beanspruchungen stoßfest ausgebildet ist. Auch der Rollrand 12 kann mit den Fortsätzen 3 entsprechenden Fortsätzen ausgestaltet sein.

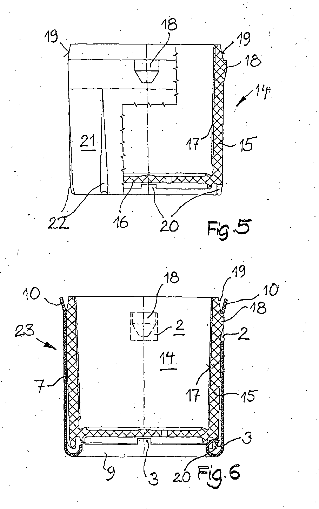

In Fig. 5 ist ein zur Hülse 7 passendes Gewindeteil 14 aus Kunststoff dargestellt, welches mit einer Zylinderwand 15 und einem Boden 16 becherförmig ausgebildet ist, um ein Rohrende sowohl radial wie auch axial abzudecken und welches an einem Innenumfang 17 mit einem eingeschnittenen Gewinde versehen ist, welches auf ein zu schützendes Rohr-Außengewinde aufzuschrauben ist. Das Gewindeteil weist Fortsätze 18 auf, die in die Aussparungen 2 der Hülse 7 passen. An einem oberen Rand oberhalb der Fortsätze 18 ist ein umlaufend konisch, sich zum Ende verjüngender Rand 19 ausgeformt. Weiterhin sind bei dem in einem Spritzgußverfahren hergestellten Gewindeteil Aufnahmen 20 eingeformt, die für einen Eingriff der Fortsätze 3 bestimmt sind.

Das Gewindeteil 14 ist in seiner Außenform insgesamt leicht konisch ausgebildet, so daß es zu dem den Aufnahmen 20 benachbarten Rand hin leicht zusammenläuft, was bei einer Spritzgußfertigung der leichten Entformung zugute kommt. Auf einer entsprechend schwach konische Mantelfläche 21 sind allerdings Längsrippen 22 ausgebildet, die mit ihren Außenkanten die Konizität aufheben und eine Zylinderflächenform zur Aufnahme der zylindrischen Hülse definieren. Die Rippen 22 stellen im übrigen eine Handhabungshilfe für den Fall dar, daß das Gewindeteil 14 als einteiliger Protektor ohne Hülse verwandt werden soll. In diesem Fall liegen die Rippen 22 außen und dienen beim Auf- oder Abschrauben des Protektors von Hand oder mit Werkzeugen als Angriffsprofilierung.

In Fig. 6 ist ein aus Gewindeteil 14 und Hülse 7 zusammengesetzte zweiteilige Protektor 23 dargestellt. Durch koaxiales Zusammenschieben, wobei die Hülse spielfrei längs der Außenkanten der Rippen 22 gleitet, hat der vornliegende Stirnrand 8 der Hülse 7 mit seiner nach vorn hin aufgeweiteten Form auch die Rastvorsprünge 18 passiert, die ihrerseits mit schrägen Auflaufflächen versehen sind. Auch die Fortsätze 3 der Hülse sind in die passenden Aufnahmen des Gewindeteils 14 gelangt. Wie die Zeichnung zeigt, haben die Fortsätze 3 innerhalb der Aufnahmen in Umfangsrichtung ein geringeres Spiel als die Rastvorsprünge 18 in den Aussparungen 2, so daß das Gewindeteil 14 beim Drehen der Hülse 7 nur von den Fortsätzen 3 her mitgenommen wird, während die Rastvorsprünge 18 unbelastet bleiben.

Ein sehr wichtiger abschließender Formvorgang mit Hilfe eines Werkzeugs 24, welches wie das Werkzeug 11 nach Art eines zylindrischen Stempels ausgebildet ist, allerdings nunmehr radial von außen zusammendrückend wirkt, formt den Rand 10 der Hülse 7 eng an den konischen Bereich 19 des Gewindeteils 14 an, so daß die Außenkante zurückgekommen ist, insbesondere aber Hülse 7 und Gewindeteil 14 spielfrei aneinanderliegen, wobei auch die Verrastung durch ein festeres Hintergreifen der Rastvorsprünge 18 mit der Kante der Rastaussparungen für eine festere Verbindung sorgt. Insofern kommt es bei dieser Verformung insbesondere auch auf ein enges Anschmiegen der Hülse 7 nahe den Rastaussparungen 2 an.

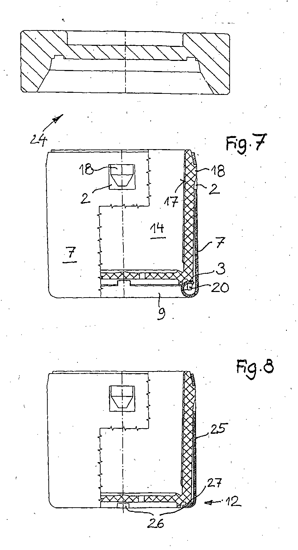

Fig. 8 zeigt eine zu der der Fig. 7 alternative Darstellungsform für einen Protektor, dessen Hülse 25 ganz entsprechend der Hülse 7 ausgebildet ist, allerdings an einem hinten liegenden Endrand lediglich eine 90°-Einrollung gemäß dem Rollrand 12 nach Fig. 4 zeigt. Auch diese Ausführungsform kann durch Fortsätze 26 und Aufnahmen 27 verdrehsicher ausgebildet werden, ohne die Verrastungen zu belasten.

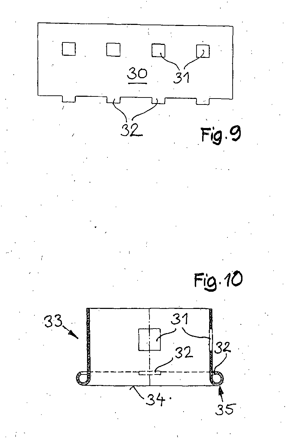

In den Fig. 9 bis 21 sind als Gegenstück zu Protektoren für Außengewinde gemäß den Fig. 1 bis 8 Protektoren für Innengewinde dargestellt.

In Fig. 9 ist wiederum als Vorprodukt ein länglich-rechteckiges Stanzblech 30 zu sehen, welches Aussparungen 31 für Verrastungen und Fortsätze 32 zur Gestaltung verdrehsicherer Verzahnungen erkennen läßt und welches gemäß Fig. 10 zu einer Ringform zusammenbiegbar und verschweißbar ist, bei der eine Hülse 33 entsteht, die gleichförmig in Umfangsrichtung verteilte Rastaussparungen 31 aufweist und an einer Hinterkante 34 mit einem Rollrand 35 versehen ist, wobei hier der Rollrand, anders als etwa bei der Hülse 7 der vorbeschriebenen Ausführungsform nach außen ausgeformt ist. Diese mit Ausnahme des Rollrandes durchgehend zylindrisch gestaltete Hülse 33 wird mit einem axial zugeführten, stempelartigen und im wesentlichen zylindrischen Formwerkzeug 36 mit Hilfe konischer Verformungsflächen 37 an diesem längs eines vornliegenden Stirnrandes 38 konisch nach vorne zulaufend verformt.

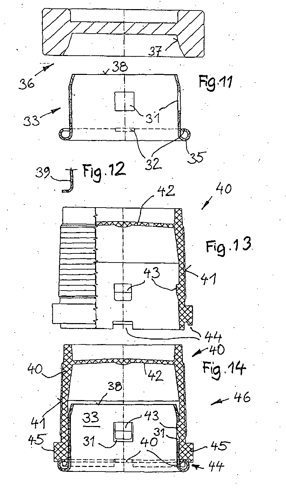

Die Fig. 12 veranschaulicht im Detail wiederum eine vereinfachte und weniger rückgebogene Form eines Rollrandes 39, der flanschartig nach außen gerichtet ist, gleichwohl aber auch Fortsätze aufweisen kann, die einer Verzahnung dienen können.

Ein zu der Hülse 33 passendes Gewindeteil 40 ist in Fig. 13 dargestellt. Dieses Gewindeteil zeigt eine nach oben hin leicht konisch zulaufende Mantelform mit einem darauf eingeschnittenen Gewinde 41. Das Gewindeteil 40 ist mit einem Boden 42 zu einer Becherform vervollständigt. Auf der Innenseite sind zum einen Rastvorsprünge 43 mit schrägen Auflaufflächen an der bei einem Zusammenstecken mit einer Hülse vornliegenden Seife und zum anderen Aufnahmen 44 für eine. Verrastung und Verzahnung mit der Hülse 33 gegeben, die im Schnitt in Fig. 14 gezeigt ist. Dabei deckt der Rollrand 35 der Hülse 33 einen nach außen vorstehenden Endbereich 45 des Gewindeteils 40 ab, der beim Einschrauben als Hand- oder Werkzeugangriffsfläche dient, im übrigen aber auch einen Schutz gegen Stöße bietet. Die Aufnahmen 44 sind auch hier in Umfangsrichtung mit geringem Übermaß zu den Fortsätzen 32 ausgebildet als die Rastvorsprünge 43 gegenüber den Rastaussparungen 31. Dies schützt die Verrastung bei Drehbelastung an der Hülse vor Beschädigungen und Beanspruchungen.

Wie Fig. 14 zeigt, ist allerdings der vornliegende Rand 38 der Hülse mit dem angrenzenden konischen Bereich, der beim Zusammenstecken von Hülse und Gewindeteil hilfreich und die Verrastung schonend war, nunmehr in einer Weise abstehend, die ein Spiel oder ein Herausfallen der Hülse bei einem Werkzeugeingriff befürchten lassen muß, wenn der insgesamt mit 46 bezeichnete Protektor zu einem robusten Einsatz gelangt.

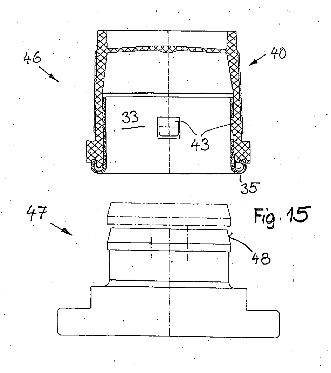

Dem wird gemäß Fig. 15 mit einem stempelartigen Werkzeug 47 abgeholfen, dessen konischer Kopfteil 48 in die Hülse eindringt und deren vorderen Rand zylindrisch rückverformt, so daß dieser sich fest und eng an die Innenwandung des Gewindeteils 40 anlegt und die Rastvorsprünge 43 fest hintergreift. Es versteht sich, daß durch ein mehrteiliges Werkzeug auch eine darüber hinausgehende Spreizbewegung möglich ist, die die Hülse am vornliegenden Rand 38 zu einer Konusform aufweitet, die noch fester anliegt.

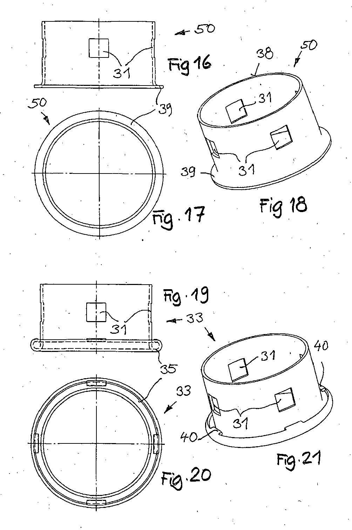

Die Fig. 16, 17 und 18 zeigen in verschiedenen Ansichten eine Hülse mit einem Rollrand 39 entsprechend Fig. 12, der also lediglich zu einem Flansch aufgeweitet ist und der im vorliegenden Fall auch keine Fortsätze ausbildet. Dies ist bei einer flachen Anlage einer Hülse in einem Gewindeteil auch entbehrlich, da hier Angriffsmöglichkeiten zu einer Einleitung von Drehmomenten über die Hülse 50 kaum zu befürchten sind.

Eine bevorzugte Hülse gemäß Fig. 19 bis 21 gibt die Hülse 33 wieder, die mit einem um mehr als 180° insgesamt und in Fortsätzen noch weiter umgebogenen Rollrand 35 sowohl einen guten Schutz des Gewindeteils liefert wie auch eine drehsichere Verbindung zwischen Hülse und Gewindeteil - ohne eine Belastung der Verrastungen - schafft.

Die vorliegend dargestellten Ausführungsformen von Protektoren für Außen- bzw. für Innengewinde sind robust ausführbar und überaus einfach herstellbar, obwohl die zusammenzufügenden Materialien von der Festigkeit, der Härte und insbesondere auch von den thermischen Ausdehnungskoeffizienten sehr unterschiedlich sind. Gerade die Wärmeausdehnungen der Materialien unterschiedlicher Größenordnung liefern die Gefahr eines Auseinanderfallens zweiteiliger Protektoren, wenn dem nicht, wie hier durch besondere Maßnahmen im Wege der Anformung der Hülse an das Gewindeteil in einem vornliegenden Stirnrandbereich und in Form von Verzahnungen gegenüber Drehbewegungen begegnet wird.

## Patentansprüche

1. Zweiteiliger Protektor (23,43) für ein mit einem Außen- oder Innengewinde versehenes Rohrende, wobei ein im wesentlichen zylindrisches Gewindeteil (14,40) aus Kunststoff das Gewinde des Rohrendes abdeckt und eine ebenfalls im wesentlichen zylindrische Hülse (7,33) aus Metall das Gewindeteil (14,40) rückseitig abstützt und wobei Gewindeteil (14,40) und die Hülse (7,33) aus zwei zusammensteckbaren Teilen gebildet sind und durch Rastvorsprünge (18,43) am Gewindeteil (14,40) und vorgeformte Rastaussparungen (2,31) an der Hülse (7,33) verrastet ineinandergreifen, **dadurch gekennzeichnet, dass** die Hülse (7,33) mit einem beim Verrastungsvorgang vornliegenden Stirnrand (8,38) zumindest nahe den Rastaussparungen (2,31) durch Verformung nach dem Verrasten eng an das Gewindeteil (14,40) angeformt ist.

2. Protektor nach Anspruch 1, **dadurch gekennzeichnet, daß** das Gewindeteil (14,40) becherförmig ausgebildet ist.

3. Protektor nach Anspruch 1 oder 2, **dadurch gekennzeichnet, daß** die Hülse (7,33) an einem beim Verrastungsvorgang hintenliegenden Endrand zu einem eine Hinterkante des Gewindeteils (14,40) übergreifenden Rollrand (9,12,35,39) geformt ist.

4. Protektor nach Anspruch 3, **dadurch gekennzeichnet, daß** der Rollrand (9,35) mit der Hinterkante des Gewindeteils (14,40) formschlüssige Verzahnungen als Verdrehsicherung bildet.

5. Protektor nach Anspruch 4, **dadurch gekennzeichnet, daß** der Rollrand (9,35) zur Verzahnung Fortsätze (3,32) aufweist, mit denen er in Aufnahmen (20,44) am Gewindeteil (14,40) eingreift.

6. Protektor nach Anspruch 3, 4 oder 5, **dadurch gekennzeichnet, daß** der Rollrand (9,35) im Querschnitt zu einem Bogen von mindestens 90° geformt ist.

7. Protektor nach einem der Ansprüche 4 bis 6, **dadurch gekennzeichnet, daß** die Rastvorsprünge (18,43) und die Rastaussparungen (2,31) mit größerem Spiel zueinander in Umfangsrichtung als die Verzahnungen (3,32;20,44) am Rollrand (9,35) versehen sind.

8. Protektor nach einem der Ansprüche 1 bis 7, **dadurch gekennzeichnet, daß** die Rastvorsprünge (18,43) am Gewindeteil (14,40) ausgebildet sind und eine schräge Auflauffläche für die Hülse (7,33) beim Verrastungsvorgang bilden.

9. Protektor nach einem der Ansprüche 1 bis 8, **dadurch gekennzeichnet, daß** er als Protektor (43) für ein Innengewinde mit einem endseitig gegenüber einem Gewindebereich (41) nach außen überstehenden Drehflansch (45) versehen ist.

10. Protektor nach einem der Ansprüche 1 bis 8, **dadurch gekennzeichnet, daß** er als Protektor (23) für ein Außengewinde eine mit Längsrippen (22) versehene Mantelfläche aufweist.

11. Verfahren zur Herstellung eines zweiteiligen Protektors (23,43) nach einem der Ansprüche 1 bis 10, bei dem eine zylindrische Hülse (7,33) aus Metall mit Rastaussparungen (2,31) gefertigt und koaxial mit einem aus Kunststoff gespritzten Gewindeteil (14,40) bis zu einer Verrastung ineinander bewegt wird, **dadurch gekennzeichnet, daß** die Hülse (7,33) vor dem Verrastungsvorgang an einem vornliegenden Stirnrand zumindest nahe Rastaussparungen (2,31) gegenüber dem Gewindeteil (14,40) schräg abstehend geformt wird und nach dem Verrastungsvorgang eng an das Gewindeteil (14,40) angeformt wird.

12. Verfahren nach Anspruch 11, **dadurch gekennzeichnet, daß** die Verformung des Stirnrandes vor dem Verrastungsvorgang mit Hilfe eines axial zugeführten Formstempels (11,36) erfolgt.

13. Verfahren nach Anspruch 11 oder 12 zur Herstellung eines Protektors (23) für ein Außengewinde, **dadurch gekennzeichnet, daß** die Verformung des Stirnrandes nach dem Verrastungsvorgang mit Hilfe eines Formenstempels (24) erfolgt.

14. Verfahren nach Anspruch 11, 12 oder 13 zur Herstellung eines Protektors nach einem der Ansprüche 4 bis 7, bei dem eine zylindrische Hülse (7,33) aus Metall mit Rastaussparungen gefertigt und koaxial mit einem aus Kunststoff gespritzten Gewindeteil (14,40) bis zu einer Verrastung ineinanderbewegt wird, **dadurch gekennzeichnet, daß** die Hülse (7,33) an einem hinteren Rand mit Fortsätzen (3,32) gestaltet wird und daß der hintere Rand zu einem Rollrand (9,35) umgeformt wird, an dem die Fortsätze (3,32) zu einer Verzahnung dem Gewindeteil (14,40) zugewandt sind.

## Claims

1. Two-part protector (23, 43) for a pipe end provided with an external or internal thread, a substantially cylindrical threaded part (14, 40) of plastics material covering the thread at the end of the pipe and a likewise substantially cylindrical sleeve (7, 33) of metal supporting the threaded part (14, 40) at the rear, and the threaded part (14, 40) and the sleeve (7, 33) being formed by two parts able to be plugged together and interengaging by latched engagement by means of latching projections (18, 43) on the threaded part (14, 40) and preformed latching openings (2, 31) in the sleeve (7, 33), **characterised in that**, at a leading edge (8, 38) which is situated at the front in the latching process and at least in an area close to the latching openings (2, 31), the sleeve (7, 33) is formed to rest tightly against the threaded part (14, 40) by forming after the latching.

2. Protector according to claim 1, **characterised in that** the threaded part (14, 40) is of a cup-like form.

3. Protector according to claim 1 or 2, **characterised in that**, at a terminal edge which is situated at the rear in the latching process, the sleeve (7, 33) is formed to have a rolled edge (9, 12, 35, 39) which fits over a rear edge of the threaded part (14, 40).

4. Protector according to claim 3, **characterised in that**, as a means of locking against twisting, the rolled edge (9, 35) forms teeth which positively interengage with the rear edge of the threaded part (14, 40).

5. Protector according to claim 4, **characterised in that**, to form the set of teeth, the rolled edge (9, 35) has extensions (3, 32) by which it engages in receptacles (20, 44) in the threaded part (14, 40).

6. Protector according to claim 3, 4 or 5, **characterised in that**, in cross-section, the rolled edge (9, 35) is shaped into a curve covering at least 90°.

7. Protector according to one of claims 4 to 6, **characterised in that** the latching projections (18, 43) and the latching openings (2, 31) are provided with a larger amount of play relative to one another in the circumferential direction than exists at the toothed interengagement (3, 32, 20, 44) at the rolled edge (9, 35).

8. Protector according to one of claims 1 to 7, **characterised in that** the latching projections (18, 43) are formed on the threaded part (14, 40) and form an inclined face for the sleeve (7, 33) to run up in the latching process.

9. Protector according to one of claims 1 to 8, **characterised in that**, as a protector (43) for an internal thread, it is provided with a flange for rotation (45) which, at one end, projects outwards beyond a threaded region (41).

10. Protector according to one of claims 1 to 8, **characterised in that**, as a protector (23) for an external thread, it has a circumferential surface provided with longitudinal ribs (22).

11. Method for producing a two-part protector (23, 43) according to one of claims 1 to 10, in which a cylindrical sleeve (7, 33) of metal is produced to have latching openings (2, 31) and is moved co-axially to a threaded part (14, 40) injection moulded from plastics material until the two are latched into one another, **characterised in that**, prior to the latching process and at a leading edge situated at the front and at least in an area close to the latching openings (2, 31), the sleeve (7, 33) is formed to be spaced obliquely away from the threaded part (14, 40), and, after the latching process, is formed to rest tightly against the threaded part (14, 40).

12. Method according to claim 11, **characterised in that** the forming of the leading edge before the latching process is performed with the help of a forming die (11, 36) which is fed in axially.

13. Method according to claim 11 or 12 for producing a protector (23) for an external thread, **characterised in that** the forming of the leading edge after the latching process is performed with the help of a forming die (24).

14. Method according to claim 11, 12 or 13 for producing a protector according to one of claims 4 to 7, in which a cylindrical sleeve (7, 33) of metal is produced to have latching openings and is moved co-axially to a threaded part (14, 40) injection moulded from plastics material until the two are latched into one another, **characterised in that** the sleeve (7, 33) is configured to have extensions (3, 32) at a rear edge and **in that** the rear edge is formed into a rolled edge (9, 35) at which the extensions (3, 32) face towards the threaded part (14, 40) to form a set of teeth.

## Revendications

1. Protecteur en deux pièces (23, 43) pour une extrémité de tube dotée d'un filet extérieur ou intérieur, une pièce filetée (14, 40) sensiblement cylindrique en matière plastique recouvrant le filet de l'extrémité de tube et une douille métallique (7, 33) également sensiblement cylindrique s'appuyant sur le dos de la pièce filetée (14, 40) et la pièce filetée (14, 40) et la douille (7, 33) étant composées de deux parties enfichables l'une dans l'autre et s'interpénétrant par encliquetage grâce à des saillies d'encliquetage (18, 43) sur la pièce filetée (14, 40) et à des creux d'encliquetage (2, 31) préformés sur la douille (7, 33), **caractérisé en ce que** la douille (7, 33) est formée étroitement sur la pièce filetée (14, 40) par formage en lui donnant un bord frontal (8, 38) situé en avant lors du processus d'encliquetage, au moins à proximité des creux d'encliquetage (2, 31).

2. Protecteur selon la revendication 1, **caractérisé en ce que** la pièce filetée (14, 40) présente une forme de godet.

3. Protecteur selon la revendication 1 ou 2, **caractérisé en ce que** la douille (7, 33) est formée sur un bord d'extrémité situé en arrière lors du processus d'encliquetage pour obtenir un bord roulé (9, 12, 35, 39) recouvrant une arête arrière de la pièce filetée (14, 40).

4. Protecteur selon la revendication 3, **caractérisé en ce que** le bord roulé (9, 35) forme avec l'arête arrière de la pièce filetée (14, 40) des dentures à conjugaison de formes servant de dispositif anti-rotation.

5. Protecteur selon la revendication 4, **caractérisé en ce que** le bord roulé (9, 35) pour la denture comprend des prolongements (3, 32) lui permettant de s'insérer dans des logements (20, 44) sur la pièce filetée (14, 40).

6. Protecteur selon la revendication 3, 4 ou 5, **caractérisé en ce que** le bord roulé (9, 35) est formé en section transversale pour obtenir un arc d'au moins 90°.

7. Protecteur selon l'une quelconque des revendications 4 à 6, **caractérisé en ce que** les saillies d'encliquetage (18, 43) et les creux d'encliquetage (2, 31) sont pourvues les uns par rapport aux autres dans la direction circonférentielle d'un jeu plus important que celui des dentures (3, 32 20, 44) sur le bord roulé (9, 35).

8. Protecteur selon l'une quelconque des revendications 1 à 7, **caractérisé en ce que** les saillies d'encliquetage (18, 43) sont formées sur la pièce filetée (14, 40) et forment une surface de butée oblique pour la douille (7, 33) lors du processus d'encliquetage.

9. Protecteur selon l'une quelconque des revendications 1 à 8, **caractérisé en ce qu'**il est pourvu, en tant que protecteur (43) pour un filet intérieur, d'une bride rotative (45) faisant saillie vers l'extérieur côté extrémité par rapport à une zone filetée (41).

10. Protecteur selon l'une quelconque des revendications 1 à 8, **caractérisé en ce qu'**il comprend en tant que protecteur (23) pour un filet extérieur une surface pourvue de nervures longitudinales (22).

11. Procédé de fabrication d'un protecteur en deux pièces (23, 43) selon l'une quelconque des revendications 1 à 10, selon lequel une douille cylindrique (7, 33) est fabriquée en métal et présente des creux d'encliquetage (2, 31) et est déplacée coaxialement avec une pièce filetée (14, 40) injectée en matière plastique jusqu'à ce qu'elles s'encliquètent l'une dans l'autre, **caractérisé en ce que** la douille (7, 33) est formée en saillie oblique avant le processus d'encliquetage sur un bord frontal situé en avant au moins à proximité des creux d'encliquetage (2, 31) par rapport à la pièce filetée (14, 40) et est formée étroitement sur la pièce filetée (14, 40) après le processus d'encliquetage.

12. Procédé selon la revendication 11, **caractérisé en ce que** le formage du bord frontal s'effectue avant le processus d'encliquetage au moyen d'un piston de formage (11, 36) amené axialement.

13. Procédé selon la revendication 11 ou 12 destiné à fabriquer un protecteur (23) pour un filet extérieur, **caractérisé en ce que** le formage du bord frontal s'effectue après le processus d'encliquetage au moyen d'un piston de formage (24).

14. Procédé selon la revendication 11, 12 ou 13 destiné à fabriquer un protecteur selon l'une quelconque des revendications 4 à 7, selon lequel une douille cylindrique (7, 33) est fabriquée en métal et présente des creux d'encliquetage et est déplacée coaxialement avec une pièce filetée (14, 40) injectée en matière plastique jusqu'à ce qu'elles s'encliquètent l'une dans l'autre, **caractérisé en ce que** la douille (7, 33) est formée sur un bord arrière et présente des prolongements (3, 32) et **en ce que** le bord arrière est façonné pour obtenir un bord roulé (9, 35) sur lequel les prolongements (3, 32) sont tournés vers la partie filetée (14, 40) pour obtenir une denture.
